# EUROPEAN PATENT SPECIFICATION

(11) **EP 2 403 311 B1**
(45) Date of publication and mention of the grant of the patent: **04.09.2019**
(21) Application number: 10745805.1
(22) Date of filing: 01.02.2010
(51) Int. Cl.: H04B 7/15, H04W 56/00

(54) **RANDOM ACCESS CONTROL METHOD, SYSTEM AND DEVICE**
VERFAHREN, SYSTEM UND VORRICHTUNG FÜR DIREKTZUGRIFFSSTEUERUNG
PROCÉDÉ, SYSTÈME ET DISPOSITIF DE COMMANDE D'ACCÈS ALÉATOIRE

(30) Priority: 26.02.2009 CN 200910078189
(43) Date of publication of application: 04.01.2012
(73) Proprietor: China Mobile Communications Corporation, Beijing 100032 (CN)
(72) Inventor: YANG, Ning, Beijing 100032 (CN); SHEN, Xiaodong, Beijing 100032 (CN); LIU, Guangyi, Beijing 100032 (CN)
(74) Representative: HGF Europe LLP
(86) International application number: PCT/CN2010/070455
(87) International publication number: WO 2010/097021

(56) References cited:
- WO-A1-2008/050425
- WO-A1-2008/096984
- WO-A1-2008/111821
- WO-A1-2008/111821
- CN-A- 101 316 134
- US-A1- 2008 043 771
- US-A1- 2008 233 940
- SCHOENEN,R. ET AL.: 'An FDD Multihop Cellular Network for 3GPP-LTE.' VTC SPRING 2008 IEEE. 11 May 2008, pages 1990 - 1994, XP031255913

## Description

### Field of the Invention

The present invention relates to the field of radio communications and particularly to a random access control technology applicable to a radio cellular network into which a relay device is incorporated.

### Background of the Invention

The 3^{rd} Generation Partnership Project (3GPP) has commenced on a task of standardizing Long Term Evolution (LTE). An existing LTE system in which a collision-based random access solution is adopted can perform two functions of uplink synchronization and random access for a User Equipment (UE), and the UE can proceed with a subsequent connection establishment process only after an uplink synchronization process is done.

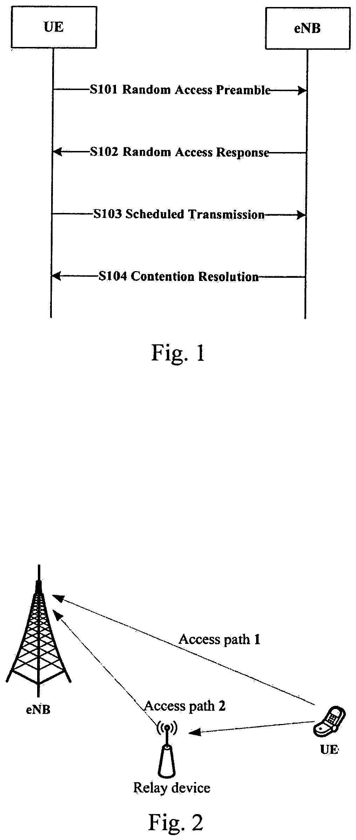

As illustrated in Fig. 1, the collision-based random access solution in the LTE system includes the following steps.

S101. A UE transmits randomly a Preamble resource for uplink synchronization, which is borne a signaling message of Random Access Preamble, over a Physical Random Access Channel (PRACH) resource.

The PRACH resource is a time and frequency resource block borne over a PRACH, and the Preamble resource is an uplink synchronization code resource; in the LTE system, there are 64 available Preamble resources, and the UE may select randomly one of the Preamble resources to be transmitted over the PRACH resource.

S102. An eNB (evolved Node B) returns a Random Access Response to the UE, and the UE thereby performs the uplink synchronization process upon reception of the Random Access Response.

If the eNB receives the same Preamble resource transmitted over the same PRACH resource by at least two UEs, uplink synchronization code collision occurs, also referred to as Preamble collision in the LTE system, and the eNB feeds back retreat information (also referred to as overload information) in the Random Access Response so that the UEs retreat in response to the retreat information and thus can not proceed with the subsequent connection establishment process, and the flow ends.

If no Preamble collision occurs, the eNB allocates the Preamble resource to the UE by feeding back uplink acknowledgement information in the Random Access Response so that the UE can proceed with the subsequent connection establishment process.

S103. The UE transmits access request information bearing a signaling message of Scheduled Transmission according to the Preamble resource allocated in the uplink acknowledgement information.

S104. The eNB returns a Connection Resolution to the UE to confirm establishment of a connection, i.e., completion of an access.

In a future LTE-Advanced system, the relaying technology is one of candidates to expand the coverage of the system and increase the capacity of the system, which requires a relay device (or referred to as a relay node) to be incorporated into an LTE-Advanced network. In the LTE-Advanced system, the random access process of the UE can still be performed in the collision-based random access solution in the existing LTE system. However, in the existing collision-based random access solution, Preamble collision occurs with a plurality of UEs when the UEs select the same Preamble resource for a random access over the same PRACH resource, and the eNB feeds back retreat information to all of the UEs subject to Preamble collision so that the UEs retreat in response to the retreat information, which may result in a significant delay and low efficiency of the access of a user, thus greatly degrading an experience of the user.
US 2008/233940 A1 discloses the following: A method for handling a random access procedure in a user equipment, called UE hereinafter, of a wireless communications system includes sending a negative acknowledgement to a network or not sending an acknowledgement corresponding to a message 4 to request retransmission of message 4 when the message 4 is not successfully received from the network.
US 2008/043771 A1 discloses the following: A method and apparatus for transmitting/receiving a Random Access Channel (RACH) signal in a communication system. A User Equipment (UE) selects one of Contention Resolution (CR) channels allocated for collision detection, and transmits the selected CR channel and a connection request message to an Evolved Node B (E-NB), and receives a response signal from the E-NB. The UE transmits the RACH signal, if a collision indicator is included in the response signal. The E-NB receives from each of UEs a connection request message and a CR channel, decodes the connection request message, and detects a collision between the UEs using the CR channel.; The E-NB generates a response signal to the connection request message according to the decoding result, generates a collision indicator according to the collision detection result, and transmits to the UEs at least one of the generated response signal, the generated collision indicator, and a unique ID of a corresponding UE.
WO 2008/111821 A1 discloses the following: The present invention relates to a preamble allocation method and a random access method in a mobile communication system. In the present invention, one among preamble resources is allocated to specific mobile stations in advance, before random access. The mobile stations request random access by transmitting a preamble based on the pre-allocated preamble resource to a base station. It is therefore possible to prevent collision caused by the fact that other mobile stations transmit the same preamble.

### Summary of the Invention

The invention provides a random access control method and system to address the problems of a significant delay in an access of a user and low efficiency of an access of a user in the existing collision-based random access solution.

Correspondingly, the invention provides a relay device, an evolved Node B and a user equipment.

A random access control method according to the invention applicable to a radio cellular network into which a relay device is incorporated includes:
transmitting, by an eNB, retreat information to at least two user equipments when the at least two user equipments transmit the same uplink synchronization code resource to the eNB over the same random access channel resource;
if one of the at least two user equipments reserves the uplink synchronization code resource from the eNB through the relay device, notifying, by the eNB, the corresponding user equipment of successful reservation of the uplink synchronization code resource through the relay device so that the user equipment accesses the radio cellular network by using the successfully reserved uplink synchronization code resource; and
notifying all of user equipments of reservation of the uplink synchronization code resource.

A random access control system according to the invention applicable to a radio cellular network into which a relay device is incorporated includes the relay device and an eNB, where:
the relay device is configured to reserve an uplink synchronization code resource from the eNB upon reception of the uplink synchronization code resource transmitted from one user equipment to the eNB over any one random access channel resource; and
the eNB is configured to feed back retreat information to at least two user equipments upon reception of the same uplink synchronization code resource transmitted over the same random access channel resource by the at least two user equipments, notify one of the at least two user equipments of successful reservation of the uplink synchronization code resource through the relay device so that the user equipment accesses the radio cellular network by using the successfully reserved uplink synchronization code resource and notify all of user equipments of reservation of the uplink synchronization code resource if the corresponding user equipment reserves the uplink synchronization code resource through the relay device.

A relay device according to the invention includes:
a reservation unit configured to reserve an uplink synchronization code resource from an eNB, upon reception of an uplink synchronization code resource transmitted from one user equipment to the eNB over any one random access channel resource; and
a forwarding unit configured to forward to the corresponding user equipment a notice of successful reservation of the uplink synchronization code resource returned from the eNB, upon reception of the notice.

An evolved Node B according to the invention applicable to a radio cellular network into which a relay device is incorporated includes a reception unit, a control unit and a processing unit, where:
the reception unit is configured to receive an uplink synchronization code resource transmitted over a random access channel resource by a user equipment and receive reservation of the uplink synchronization code resource through the relay device from the user equipment;
the control unit is configured to feed back retreat information to at least two user equipments upon reception of the same uplink synchronization code resource transmitted over the same random access channel resource by the at least two user equipments and trigger the processing unit if one of the at least two user equipments reserves the uplink synchronization code resource through the relay device; and
the precession unit is configured to notify the corresponding user equipment of successful reservation of the uplink synchronization code resource through the relay device so that the user equipment accesses the radio cellular network by using the successfully reserved uplink synchronization code resource and notify all of user equipments of reservation of the uplink synchronization code resource.

A user equipment according to the invention applicable to a radio cellular network into which a relay device is incorporated includes:
a random access initiation unit configured to randomly transmit an uplink synchronization code resource to an eNB over a random access channel resource; and
a random access processing unit configured to ignore retreat information and access the radio cellular network by using the successfully reserved uplink synchronization code resource upon reception of both a notice of successful reservation of the uplink synchronization code resource transmitted from the relay device and the retreat information fed back from the eNB.

With the random access control method, system and devices according to the invention applicable to a radio cellular network into which a relay device is incorporated, if the relay device receives the uplink synchronization code resource transmitted from one user equipment to the eNB over any one random access channel resource, it reserves the uplink synchronization code resource from the eNB; and when the uplink synchronization code collision occurs at the eNB, if one of the user equipments reserves the uplink synchronization code resource from the eNB through the relay device, the eNB notifies the corresponding user equipment of successful reservation of the uplink synchronization code resource through the relay device and notifies all of user equipments of reservation of the uplink synchronization code resource; and if the user equipment receives both the retreat information and the notice of successful reservation of the uplink synchronization code resource, it ignores the retreat information and accesses the radio cellular network by using the successfully reserved uplink synchronization code resource. The invention utilizes the mechanism in which the relay device reserves the uplink synchronization code resource to make the user equipment with successful reservation of the uplink synchronization code resource timely access to the radio cellular network without retreating to thereby achieve in effect an alleviated delay in the access of a user and improved efficiency of the access of a user and hence improve the experience of the user.

### Brief Description of the Drawings

Fig. 1 is a flow chart of a random access solution for an LTE system in the prior art;
Fig. 2 is a schematic diagram of comparing access paths according to an embodiment of the invention;
Fig. 3 is a flow chart of a random access control method according to an embodiment of the invention;
Fig. 4 is a flow chart of a random access control method for an LTE-Advanced system according to a first embodiment of the invention;
Fig. 5 is a flow chart of a random access control method for an LTE-Advanced system according to a second embodiment of the invention;
Fig. 6 is a flow chart of a random access control method for an LTE-Advanced system according to a third embodiment of the invention;
Fig. 7 is a block diagram of a random access control system according to an embodiment of the invention;
Fig. 8 is a structural block diagram of a relay device according to an embodiment of the invention;
Fig. 9 is a structural block diagram of an eNB according to an embodiment of the invention; and
Fig. 10 is a structural block diagram of a user equipment according to an embodiment of the invention.

### Detailed Description of the Embodiments

In a radio cellular network, e.g., an LTE-Advanced network, into which a relay device is incorporated, the relay device as an effective approach to expand the coverage of a system and increase the capacity of a system can cover an area together with an eNB. Since the number of UEs covered by the relay device differs from the number of UEs covered by the eNB due to their different transmission power, if a UE1 inside a relay coverage area and a UE2 outside the relay coverage area transmit the same Preamble resource to the eNB over the same PRACH resource, the Preamble resource may be reserved through the relay device so that the colliding user UE1 inside the relay coverage area can timely access to the radio cellular network without retreating to thereby reduce delay in the access of the user and improve efficiency of the access of the user and hence improve the experience of the user.

A comparative description of access paths is given by taking an LTE-Advanced system as an example. As illustrated in Fig. 2, a relay device is incorporated into the LTE-Advanced system, and a random access process of a UE can still be performed in a collision-based random access solution in an existing LTE system over an access path shown as an access path 1 in Fig. 2; and a random access process of the UE may be performed in a random access solution according to an embodiment of the invention over an access path shown as an access path 2 in Fig. 2.

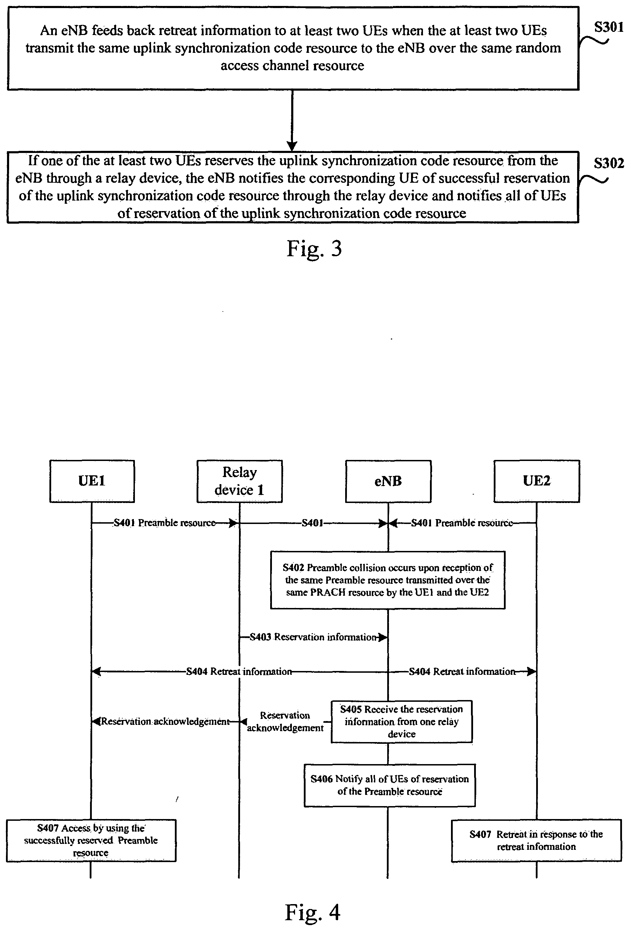

As illustrated in Fig. 3, a random access control method according to an embodiment of the invention applicable to a radio cellular network into which a relay device is incorporated includes the following steps.

S301. An eNB feeds back retreat information to at least two UEs when the at least two UEs transmit the same uplink synchronization code resource to the eNB over the same random access channel resource.

S302. If one of the at least two UEs reserves the uplink synchronization code resource from the eNB through a relay device, the eNB notifies the corresponding UE of successful reservation of the uplink synchronization code resource through the relay device and notifies all of UEs of reservation of the uplink synchronization code resource, where the notice of successful reservation of the uplink synchronization code resource instructs the UE to ignore retreat information and access the radio cellular network by using the successfully reserved uplink synchronization code resource.

It shall be noted that for the relay device accessed by one of the UEs, the UE may reserve the uplink synchronization code resource from the eNB through the relay device, and for the relay device accessed concurrently by more than one of the UEs, uplink synchronization code collision also occurs at the relay device, and the relay device does not reserve the uplink synchronization code resource from the eNB.

Correspondingly, if one of the at least two UEs receives the notice of successful reservation of the uplink synchronization code resource and receives retreat information, the UE ignores the retreat information and accesses the radio cellular network by using the successfully reserved uplink synchronization code resource.

If one of the at least two UEs receives only retreat information, the UE retreats in response to the retreat information as in the prior art.

Preferably, if the at least two UEs reserve the uplink synchronization code resource from the eNB through different relay devices, the eNB determines failing reservation of the uplink synchronization code resource; and the eNB may further notify the corresponding UEs of failing reservation of the uplink synchronization code resource through the relay devices after determining failing reservation of the uplink synchronization code resource.

If the eNB receives no reservation of the uplink synchronization code resource from any relay device, the eNB feeds back retreat information to the at least two UEs as in the prior art.

The random access solution according to the embodiment of the invention is applicable to the radio cellular network into which the relay device is incorporated, e.g., an LTE-Advanced network and subsequent evolved networks thereof, and a World Interoperability for Microwave Access (WiMAX) network. The eNB mentioned in the embodiment of the invention refers to an eNB in the LTE-Advanced network and the subsequent evolved networks thereof, or a Base Station (BS) in the WiMAX network.

The random access solution according to the embodiment of the invention will be detailed below by taking the LTE-Advanced network as an example with reference to the drawings. An LTE-Advanced system includes an eNB, a relay device and a plurality of UEs, where a random access channel resource refers to a PRACH resource and an uplink synchronization code resource refers to a Preamble resource.

Different application scenarios will be introduced respectively.

### A First Embodiment

In the present embodiment, if a UE1 and a UE2 select the same Preamble resource to initiate a random access process over the same PRACH resource, and the UE1 is inside a coverage area of a relay device 1 and the UE2 is not inside a coverage area of any relay device, as illustrated in Fig. 4, the process includes the following steps.

S401. The UE1 and the UE2 transmit the Preamble resource for uplink synchronization, which bears a signaling message of Random Access Preamble, to an eNB over a PRACH channel over the same PRACH resource.

There are 64 Preamble resources available in the LTE-Advanced system.

S402. The eNB receives the same Preamble resource transmitted over the same PRACH resource by the UE1 and the UE2, and then Preamble collision occurs at the eNB.

Since the Preamble collision occurs at the eNB, the eNB shall feed back retreat information to the UE1 and the UE2, generally within 10ms.

S403. The relay device 1 transmits reservation information to the eNB to reserve the Preamble resource upon reception of the Preamble resource transmitted from one of the UEs, i.e., the UE1, to the eNB over the current PRACH resource.

S404. The eNB feeds back retreat information to the UE1 and the UE2.

S405. The eNB transmits to the UE1 a reservation acknowledgement through the relay device 1 to notify the UE1 of successful reservation of the Preamble resource upon reception of the reservation of the Preamble resource through the relay device 1 from the UE1.

S406. The eNB notifies all of UEs of reservation of the Preamble resource.

The eNB notifies all of the UEs of reservation of the Preamble resource to thereby ensure a subsequent random access process of the UE1 to be performed smoothly, and the eNB may notify all of the UEs of reservation of the Preamble resource in a broadcast message over a broadcast channel or in a bit-map.

The bit-map refers to that bits are set respectively for the 64 Preamble resources so that if a bit corresponding to one of the Preamble resources is set to 1, it indicates that the Preamble resource has been reserved; or if the bit is set to 0, it indicates that the Preamble resource has not been reserved.

S407. The UE1 ignores the retreat information and accesses the LTE-Advanced network by using the successfully reserved Preamble resource upon reception of the reservation acknowledgement and the retreat information, and the UE2 retreats in response to the retreat information upon reception of only the retreat information.

It shall be noted that the S404 and the S405 are just reference numerals of the steps presented for a convenient description, but actually there is no exact sequential relationship between the two steps.

### A Second Embodiment

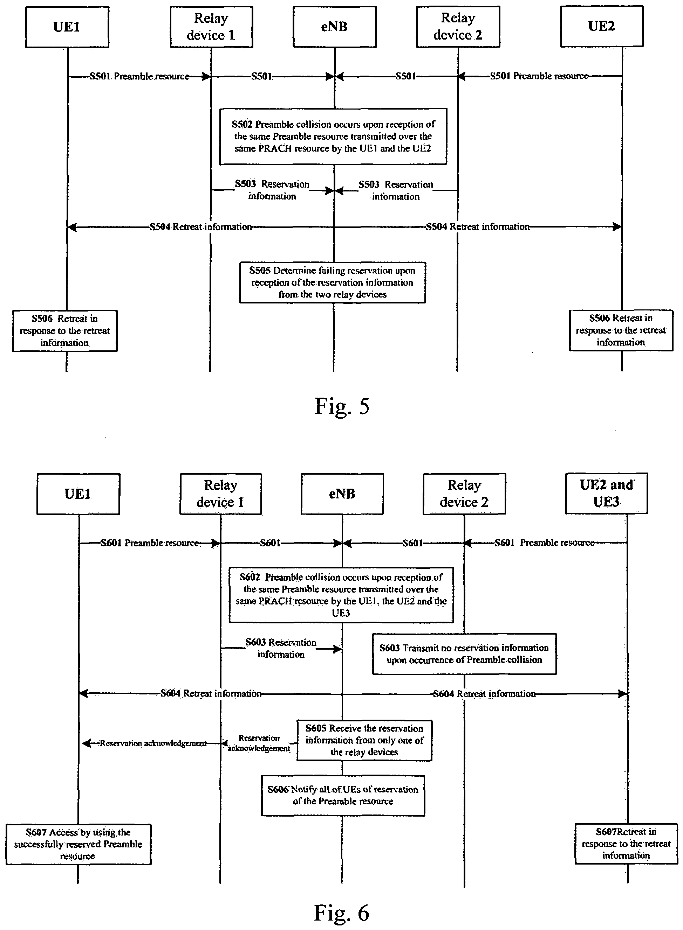

In the present embodiment, if a UE1 and a UE2 select the same Preamble resource to initiate a random access process over the same PRACH resource, the UE1 is inside a coverage area of a relay device 1 and the UE2 is inside a coverage area of a relay device 2, as illustrated in Fig. 5, the process includes the following steps.

S501. The UE1 and the UE2 transmit the Preamble resource for uplink synchronization, which bears a signaling message of Random Access Preamble, to an eNB over a PRACH channel over the same PRACH resource.

S502. The eNB receives the same Preamble resource transmitted over the same PRACH resource by the UE1 and the UE2, and then Preamble collision occurs at the eNB.

S503. The relay device 1 transmits reservation information to the eNB to reserve the Preamble resource upon reception of the Preamble resource transmitted from one of the UEs, i.e., the UE1, to the eNB over the current PRACH resource, and the relay device 2 transmits reservation information to the eNB to reserve the Preamble resource upon reception of the Preamble resource transmitted from one of the UEs, i.e., the UE2, to the eNB over the current PRACH resource.

S504. The eNB feeds back retreat information to the UE1 and the UE2.

S505. The eNB determines failing reservation of the Preamble resource upon reception of the reservation of the Preamble resource concurrently from the two relay devices, i.e., the relay device 1 and the relay device 2.

S506. The UE1 and the UE2 retreat in response to the retreat information upon reception of only the retreat information.

It shall be noted that the S504 and the S505 are reference numerals of the steps presented for a convenient description, but actually there is no exact sequential relationship between the two steps.

### A Third Embodiment

In the present embodiment, if a UE1, a UE2 and a UE3 select the same Preamble resource to initiate a random access process over the same PRACH resource, the UE1 is inside a coverage area of a relay device 1, and the UE2 and the UE3 are inside a coverage area of a relay device 2, as illustrated in Fig. 6, the process includes the following steps.

S601. The UE1, the UE2 and the UE3 transmit the Preamble resource for uplink synchronization, which bears a signaling message of Random Access Preamble, to an eNB over a PRACH channel over the same PRACH resource.

S602. The eNB receives the same Preamble resource transmitted over the same PRACH resource by the UE1, the UE2 and the UE3, and then Preamble collision occurs at the eNB.

S603. The relay device 1 transmits reservation information to the eNB to reserve the Preamble resource upon reception of the Preamble resource transmitted from one of the UEs, i.e., the UE1, to the eNB over the current PRACH resource.

The relay device 2 receives the Preamble resource transmitted from two of the UEs, i.e., the UE2 and the UE3, to the eNB over the current PRACH resource, and then Preamble collision occurs at the relay device 2, and the relay device 2 does not transmit reservation information to the eNB.

S604. The eNB feeds back retreat information to the UE1, the UE2 and the UE3.

S605. The eNB transmits to the UE1 a reservation acknowledgement through the relay device 1 to notify the UE1 of successful reservation of the Preamble resource upon reception of the reservation of the Preamble resource through the relay device 1 from the UE1.

S606. The eNB notifies all of UEs of reservation of the Preamble resource.

The eNB notifies all of the UEs of reservation of the Preamble resource to thereby ensure a subsequent random access process of the UE1 to be performed smoothly, and the eNB may notify all of the UEs of reservation of the Preamble resource in a broadcast message over a broadcast channel or in a bit-map.

S607. The UE1 ignores the retreat information and accesses the LTE-Advanced network by using the successfully reserved Preamble resource upon reception of the reservation acknowledgement and the retreat information, and the UE2 and the UE3 retreat in response to the retreat information upon reception of only the retreat information.

It shall be noted that the S604 and the S605 are just reference numerals of the steps presented for a convenient description, but actually there is no exact sequential relationship between the two steps.

In the random access control method in the LTE-Advanced system according to the embodiments of the invention, if the Preamble collision occurs at the eNB, the eNB does not simply transmit the retreat information to the respective UEs subject to the Preamble collision so that the UEs retreat in response to the retreat information, but instead waits the reservation information from the relay device, and if no Preamble collision occurs with the random accesses of the UEs at the relay device, the relay device transmits the reservation information to the eNB to reserve the Preamble resource; and the eNB still transmits the retreat information to all of the UEs subject to the Preamble collision and also feeds back the reservation acknowledgement to the relay device upon reception of the reservation information transmitted through the relay device from one of the UEs, and the relay device forwards the reservation acknowledgement to the corresponding UE immediately upon reception of the reservation acknowledgment. The eNB may notify all of the UEs of reservation of the Preamble resource in a broadcast message or in a bit-map. If the UE receives only the retreat information from the eNB, it has to retreat; or if the UE receives the retreat information and the reservation acknowledgement forwarded by the relay device, it accesses the LTE-Advanced network by using the successfully reserved Preamble resource without retreating.

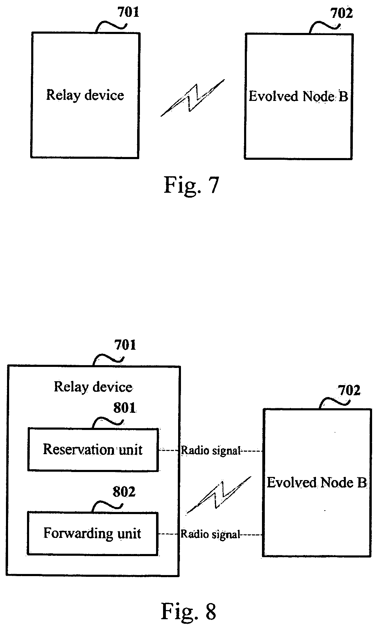

Based upon the same technical idea, an embodiment of the invention provides a random access control system applicable to a radio cellular network into which a relay device is incorporated, and as illustrated in Fig. 7, the system includes a relay device 701 and an eNB 702.

The relay device 701 is configured to reserve an uplink synchronization code resource from the eNB upon reception of the uplink synchronization code resource transmitted from one UE to the eNB over any one random access channel resource.

The eNB 702 is configured to feed back retreat information to at least two UEs upon reception of the same uplink synchronization code resource transmitted over the same random access channel resource by the at least two UEs, notify one of the at least two UEs of successful reservation of the uplink synchronization code resource through the relay device so that the UE accesses the radio cellular network by using the successfully reserved uplink synchronization code resource and notify all of UEs of reservation of the uplink synchronization code resource if the corresponding UE reserves the uplink synchronization code resource through the relay device.

Preferably, the eNB 702 is further configured to determine failing reservation of the uplink synchronization code resource if the at least two UEs reserve the uplink synchronization code resource respectively through different relay devices.

A possible structure of the relay device as illustrated in Fig. 8 includes a reservation unit 801 and a forwarding unit 802.

The reservation unit 801 is configured to reserve an uplink synchronization code resource from an eNB upon reception of the uplink synchronization code resource transmitted from one UE to the eNB over any one random access channel resource.

The forwarding unit 802 is configured to forward to the corresponding UE a notice of successful reservation of the uplink synchronization code resource returned from the eNB upon reception of the notice.

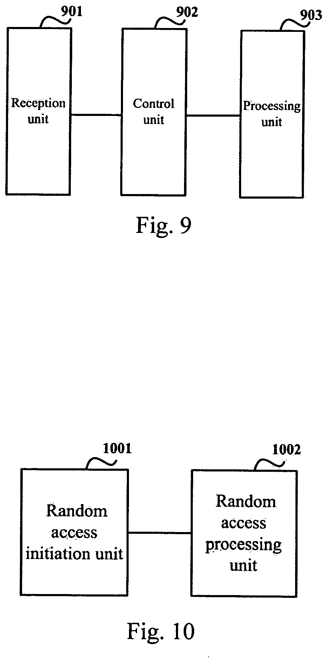

A possible structure of the eNB as illustrated in Fig. 9 includes a reception unit 901, a control unit 902 and a processing unit 903.

The reception unit 901 is configured to receive an uplink synchronization code resource transmitted over a random access channel resource by a UE and receive reservation of the uplink synchronization code resource through a relay device from the UE.

The control unit 902 is configured to feed back retreat information to at least two UEs upon reception of the same uplink synchronization code resource transmitted over the same random access channel resource by the at least two UEs and to trigger the processing unit 903 if one of the at least two UEs reserves the uplink synchronization code resource through the relay device.

The processing unit 903 is configured to notify the corresponding UE of successful reservation of the uplink synchronization code resource through the relay device so that the UE accesses a radio cellular network by using the successfully reserved uplink synchronization code resource and to notify all of UEs of reservation of the uplink synchronization code resource.

Preferably, the control unit 902 is further configured to determine failing reservation of the uplink synchronization code resource if the at least two UEs reserve the uplink synchronization code resource respectively through different relay devices.

Correspondingly, an embodiment of the invention further provides a user equipment, which as illustrated in Fig. 10 includes a random access initiation unit 1001 and a random access processing unit 1002.

The random access initiation unit 1001 is configured to randomly transmit an uplink synchronization code resource to an eNB over a random access channel resource.

The random access processing unit 1002 is configured to ignore retreat information and access a radio cellular network by using the successfully reserved uplink synchronization code resource upon reception of both a notice of successful reservation of the uplink synchronization code resource transmitted from a relay device and the retreat information fed back from the eNB.

With the random access control method, system and devices according to the embodiments of the invention applicable to a radio cellular network into which a relay device is incorporated, if the relay device receives the uplink synchronization code resource transmitted from one UE to the eNB over any one random access channel resource, it reserves the uplink synchronization code resource from the eNB; and when the uplink synchronization code collision occurs at the eNB, if one of the UEs reserves the uplink synchronization code resource from the eNB through the relay device, the eNB notifies the corresponding UE of successful reservation of the uplink synchronization code resource through the relay device and notifies all of UEs of reservation of the uplink synchronization code resource, and the UE may access the radio cellular network by using the successfully reserved uplink synchronization code resource. This solution utilizes the mechanism in which the relay device reserves the uplink synchronization code resource to make the UE with successful reservation of the uplink synchronization code resource timely access to the radio cellular network without retreating to thereby achieve in effect an alleviated delay in the access of a user and improved efficiency of the access of a user and hence improve the experience of the user.

It will be appreciated that one skilled in the art may make various modifications and alterations to the present invention without departing from the scope of the present invention. Accordingly, if these modifications and alterations to the present invention fall within the scope of the claims of the present invention and their equivalents, the present invention intends to include all these modifications and alterations.

## Claims

1. A random access control method applicable to a radio cellular network into which a relay device is incorporated, the method comprises:
transmitting (S301), by an evolved Node B, retreat information to at least two user equipments when the at least two user equipments transmit the same uplink synchronization code resource to the evolved Node B over the same random access channel resource;
receiving at the relay device from one user equipment an uplink synchronization code resource (S401) and transmitting by the relay device the uplink synchronization code resource to an evolved Node B over any one random access channel resource;
reserving by the relay device the uplink synchronization code resource and transmitting reservation information to evolved Node B;
if one of the at least two user equipments reserves successfully the uplink synchronization code resource from the evolved Node B through the relay device, notifying (S302), by the evolved Node B, the one user equipment of successful reservation of the uplink synchronization code resource through the relay device, the one user equipment accesses the radio cellular network by using the successfully reserved uplink synchronization code resource; and
notifying (S302) all of user equipments of reservation of the uplink synchronization code resource.

2. The method of claim 1, further comprising:
determining, by the evolved Node B, failing reservation of the uplink synchronization code resource if the at least two user equipments reserve the uplink synchronization code resource from the evolved Node B respectively through different relay devices.

3. The method of claim 1, wherein the evolved Node B notifies all of the user equipments of reservation of the uplink synchronization code resource in a broadcast message or in a bit-map.

4. The method of claim 1, further comprising:
ignoring, by the user equipment, the retreat information and accessing the radio cellular network by using the successfully reserved uplink synchronization code resource upon reception of both the notice of successful reservation of the uplink synchronization code resource and the retreat information.

5. The method of any one of claims 1 to 4, wherein the radio cellular network into which the relay device is incorporated is a Long Term Evolution, LTE, -Advanced network, the random access channel resource is a Physical Random Access Channel, PRACH, resource, and the uplink synchronization code resource is a Preamble resource.

6. A random access control system applicable to a radio cellular network into which a relay device (701) is incorporated, the system comprises the relay device (701) and an evolved Node B (702),
the relay device is configured to receive from one user equipment an uplink synchronization code resource (S401) and to transmit by the relay to an evolved Node B over any one random access channel resource;
the relay device (701) is further configured to reserve the received uplink synchronization code resource and to transmit the reservation information of the uplink synchronization code resource to the evolved Node B; and
the evolved Node B (702) is configured to feed back retreat information to at least two user equipments upon reception of the same uplink synchronization code resource transmitted over the same random access channel resource by the at least two user equipments, notify the one of the at least two user equipments of successful reservation of the uplink synchronization code resource through the relay device (701), the one user equipment accesses the radio cellular network by using the successfully reserved uplink synchronization code resource and the evolved Node B notifies all of user equipments of reservation of the uplink synchronization code resource if the one user equipment reserved the uplink synchronization code resource through the relay device (701).

7. The system of claim 6, wherein:
the evolved Node B (702) is further configured to determine failing reservation of the uplink synchronization code resource if the at least two user equipments reserve the uplink synchronization code resource respectively through different relay devices.

8. A relay device (701), applicable to a radio network into which the relay device is incorporated,
the relay device is configured to receive from one user equipment an uplink synchronization code resource (S401) to be transmitted by the relay to an evolved Node B over any one random access channel resource;
the relay further comprising,
a reservation unit (801) configured to reserve the received uplink synchronization code resource and the relay is configured to transmit a reservation information (S403) of the reserved uplink synchronization code to the evolved Node B, and
a forwarding unit (802) configured to forward to the one user equipment a notice of successful reservation of the uplink synchronization code resource returned from the evolved Node B (702), upon reception of the notice.

9. An evolved Node B (702) applicable to a radio cellular network into which a relay device (701) is incorporated, the evolved Node B (702) comprises a reception unit (901), a control unit (902) and a processing unit (903), wherein:
the reception unit (901) is configured to receive an uplink synchronization code resource transmitted over a random access channel resource by a user equipment and receive reservation
information of the uplink synchronization code resource through the relay device from the user equipment;
the control unit (902) is configured to feed back retreat information to at least two user equipments upon reception of the same uplink synchronization code resource transmitted over the same random access channel resource by the at least two user equipments and trigger the processing unit if one of the at least two user equipments reserves the uplink synchronization code resource through the relay device; and
the processing unit (903) is configured to notify the one user equipment of successful reservation of the uplink synchronization code resource through the relay device so that the one user equipment accesses the radio cellular network by using the successfully reserved uplink synchronization code resource and notify all of user equipments of reservation of the uplink synchronization code resource.

10. The evolved Node B of claim 9, wherein:
the control unit (902) is further configured to determine failing reservation of the uplink synchronization code resource if the at least two user equipments reserve the uplink synchronization code resource respectively through different relay devices.

11. A user equipment applicable to a radio cellular network into which a relay device is incorporated, the user equipment comprises:
a random access initiation unit (1001) configured to randomly transmit an uplink synchronization code resource to an evolved Node B over a random access channel resource; and
a random access processing unit (1002) configured to ignore retreat information and access the radio cellular network by using the successfully reserved uplink synchronization code resource upon reception of both a notice of successful reservation of the uplink synchronization code resource transmitted from the relay device and the retreat information fed back from the evolved Node B.

## Patentansprüche

1. Direktzugriffssteuerungsverfahren, das auf ein Funkzellennetz anwendbar ist, in welches eine Relaisvorrichtung eingebunden ist, umfassend:
Übertragen (S301) einer Rückzugsinformationen zu mindestens zwei Benutzergeräten durch einen entwickelten Knoten B, wenn die mindestens zwei Benutzergeräte die gleiche Aufwärtsverbindungssynchronisationscoderessource an den entwickelten Knoten B über dieselbe Direktzugriffskanalressource übertragen;
Empfangen (S401) einer Aufwärtsverbindungssynchronisationscoderessource von einem Benutzergerät an der Relaisvorrichtung und Übertragen der Aufwärtsverbindungssynchronisationscoderessource an einen entwickelten Knoten B über eine beliebige Direktzugriffskanalressource durch die Relaisvorrichtung;
Reservieren der Aufwärtsverbindungssynchronisationscoderessource durch die Relaisvorrichtung und Übertragen einer Reservierungsinformation an den entwickelten Knoten B;
wenn eines der mindestens zwei Benutzergeräte die Aufwärtsverbindungssynchronisationscoderessource von dem entwickelten Knoten B über die Relaisvorrichtung erfolgreich reserviert, Benachrichtigen (S302) des einen Benutzergeräts über die erfolgreiche Reservierung der Aufwärtsverbindungssynchronisationscoderessource über die Relaisvorrichtung, so dass das eine Benutzergerät unter Verwendung der erfolgreich reservierten Aufwärtsverbindungssynchronisationscoderessource auf das Funkzellennetz zugreift durch den entwickelten Knoten B; und
Benachrichtigen (S302) aller Benutzergeräte über die Reservierung der Aufwärtsverbindungssynchronisationscoderessource.

2. Verfahren nach Anspruch 1, ferner umfassend:
Feststellen einer fehlgeschlagenen Reservierung der Aufwärtsverbindungssynchronisationscoderessource, wenn die mindestens zwei Benutzergeräte die Aufwärtsverbindungssynchronisationscoderessource von dem entwickelten Knoten B jeweils durch unterschiedliche Relaisvorrichtungen reservieren, durch den entwickelten Knoten B.

3. Verfahren nach Anspruch 1, wobei der entwickelte Knoten B alle Benutzergeräte über die Reservierung der Aufwärtsverbindungssynchronisationscoderessource in einer Rundsendenachricht oder in einer Punktegrafik benachrichtigt.

4. Verfahren nach Anspruch 1, weiter umfassend:
Ignorieren der Rückzugsinformation durch das Benutzergerät und Zugreifen auf das Funkzellennetz unter Verwendung der erfolgreich reservierten Aufwärtsverbindungssynchronisationscoderessource nach Empfang sowohl der Benachrichtigung über die erfolgreiche Reservierung der Aufwärtsverbindungssynchronisationscoderessource als auch der Rückzugsinformation.

5. Verfahren nach einem der Ansprüche 1 bis 4, wobei das Funkzellennetz, in das die Relaisvorrichtung eingebunden ist, ein LTE-(Long Term Evolution)-Advanced-Netz ist und die Direktzugriffskanalressource eine PRACH-(Physical Random Access Channel, physikalischer Direktzugriffskanal)-Ressource ist und die Aufwärtsverbindungssynchronisationscoderessource eine Preamble-Ressource ist.

6. Direktzugriffssteuerungssystem, das auf ein Funkzellennetz anwendbar ist, in das eine Relaisvorrichtung (701) eingebunden ist, wobei das System die Relaisvorrichtung (701) und einen entwickelten Knoten B (702) umfasst, wobei die Relaisvorrichtung konfiguriert ist, um von einem Benutzergerät eine Aufwärtsverbindungssynchronisationscoderessource zu empfangen (S401), um durch das Relais über eine beliebige Direktzugriffskanalressource an den entwickelten Knoten B übertragen zu werden; wobei die Relaisvorrichtung (701) weiter konfiguriert ist, um die empfangene Aufwärtsverbindungssynchronisationscoderessource zu reservieren und die Reservierungsinformation der Aufwärtsverbindungssynchronisationscoderessource an den entwickelten Knoten B zu übertragen;
und der entwickelte Knoten B (702) konfiguriert ist, um nach einem Empfang derselben Aufwärtsverbindungssynchronisationscoderessource, die durch die mindestens zwei Benutzergeräte über dieselbe Direktzugriffskanalressource übertragen wurde, eine Rückzugsinformation an die mindestens zwei Benutzergeräte zurückzumelden, das eine der mindestens zwei Benutzergeräte über die erfolgreiche Reservierung der Aufwärtsverbindungssynchronisationscoderessource über die Relaisvorrichtung (701) zu benachrichtigen, so dass das eine Benutzergerät unter Verwendung der erfolgreich reservierten Aufwärtsverbindungssynchronisationscoderessource auf das Funkzellennetz zugreift, und alle Benutzergeräte über die Reservierung der Aufwärtsverbindungssynchronisationscoderessource zu benachrichtigen, wenn das eine Benutzergerät die Aufwärtsverbindungssynchronisationscoderessource über die Relaisvorrichtung (701) reserviert hat.

7. System nach Anspruch 6, wobei:
der entwickelte Knoten B ferner konfiguriert ist, um eine fehlgeschlagene Reservierung der Aufwärtsverbindungssynchronisationscoderessource festzustellen, wenn die mindestens zwei Benutzergeräte die Aufwärtsverbindungssynchronisationscoderessource jeweils über unterschiedliche Relaisvorrichtungen reservieren.

8. Relaisvorrichtung (701), die für ein Funkzellennetz anwendbar ist, in welches eine Relaisvorrichtung eingebunden ist, wobei die Relaisvorrichtung konfiguriert ist, um von einem Benutzergerät eine Aufwärtsverbindungssynchronisationscoderessource zu empfangen (S401), um durch das Relais über eine beliebige Direktzugriffskanalressource an den entwickelten Knoten B übertragen zu werden;
wobei das Relais ferner umfasst:
eine Reservierungseinheit (801), die konfiguriert ist, um die empfangene Aufwärtsverbindungssynchronisationscoderessource zu reservieren, und das Relais konfiguriert ist, um eine Reservierungsinformation der Aufwärtsverbindungssynchronisationscoderessource an den entwickelten Knoten B zu übertragen (S40); und
eine Weiterleitungseinheit (802), die konfiguriert ist, um eine Benachrichtigung über die erfolgreiche Reservierung der Aufwärtsverbindungssynchronisationscoderessource, die von dem entwickelten Knoten B (702) zurückgesendet wird, nach Empfang der Nachricht an das ein Benutzergerät weiterzuleiten.

9. Ein entwickelter Knoten B (702), der auf ein Funkzellennetz anwendbar ist, in welches eine Relaisvorrichtung (701) eingebunden ist, wobei der entwickelte Knoten B (702) eine Empfangseinheit (901), eine Steuereinheit (902) und eine Verarbeitungseinheit (903) umfasst, wobei:
die Empfangseinheit (901) konfiguriert ist, um eine Aufwärtsverbindungssynchronisationscoderessource, die über eine Direktzugriffskanalressource durch ein Benutzergerät gesendet wird, zu empfangen und eine Reservierungsinformation der Aufwärtsverbindungssynchronisationscoderessource durch die Relaisvorrichtung von dem Benutzergerät zu empfangen;
wobei die Steuereinheit (902) konfiguriert ist, um nach Empfang derselben Aufwärtsverbindungssynchronisationscoderessource, die über dieselbe Direktzugriffskanalressource durch mindestens zwei Benutzergeräte übertragen wird, eine Rückzugsinformation an die mindestens zwei Benutzergeräte zurückzumelden und die Verarbeitungseinheit anzusteuern, wenn eines der mindestens zwei Benutzergeräte die Aufwärtsverbindungssynchronisationscoderessource über das Relaisgerät reserviert; und
die Verarbeitungseinheit (903) konfiguriert ist, um das eine Benutzergerät über die erfolgreiche Reservierung der Aufwärtsverbindungssynchronisationscoderessource durch die Relaisvorrichtung zu benachrichtigen, so dass das eine Benutzergerät unter Verwendung der erfolgreich reservierten Aufwärtsverbindungssynchronisationscoderessource auf das Mobilfunknetz zugreift, und alle Benutzergeräte über die Reservierung der Aufwärtsverbindungssynchronisationscoderessource zu benachrichtigen.

10. Entwickelter Knoten B nach Anspruch 9, wobei:
die Steuereinheit (902) ferner konfiguriert ist, um eine fehlgeschlagene Reservierung der Aufwärtsverbindungssynchronisationscoderessource festzustellen, wenn die mindestens zwei Benutzergeräte die Aufwärtsverbindungssynchronisationscoderessource jeweils über unterschiedliche Relaisvorrichtungen reservieren.

11. Benutzergerät, das auf ein Funkzellennetz anwendbar ist, in welches eine Relaisvorrichtung eingebunden ist, wobei das Benutzergerät umfasst:
eine Direktzugriffsinitiierungseinheit (1001), die konfiguriert ist, um eine Aufwärtsverbindungssynchronisationscoderessource über eine Direktzugriffskanalressource zufällig an einen entwickelten Knoten B zu übertragen; und
eine Direktzugriffsverarbeitungseinheit (1002), die konfiguriert ist, um nach Empfang sowohl einer Benachrichtigung über eine erfolgreiche Reservierung durch die Relaisvorrichtung übertragenen Aufwärtsverbindungssynchronisationscoderessource als auch der vom entwickelten Knoten B zurückgemeldeten Rückzugsinformation die Rückzugsinformation zu ignorieren und unter Verwendung der erfolgreich reservierten Aufwärtsverbindungssynchronisationscoderessource auf das Funkzellennetz zuzugreifen.

## Revendications

1. Procédé de commande d'accès aléatoire applicable à un réseau cellulaire radio dans lequel est incorporé un dispositif de relais, le procédé comprenant les étapes consistant à:
transmettre (S301) au moyen d'un Noeud B évolué une information de retrait à au moins deux équipements d'utilisateur quand lesdits au moins deux équipements d'utilisateur transmettent la même ressource de code de synchronisation de liaison montante au Noeud B évolué sur la même ressource de canal d'accès aléatoire;
recevoir au niveau du dispositif de relais depuis un équipement d'utilisateur une ressource de code de synchronisation de liaison montante (S401) et transmettre au moyen du dispositif de relais la ressource de code de synchronisation de liaison montante à un Noeud B évolué sur une ressource quelconque de canal d'accès aléatoire;
recevoir au moyen du dispositif de relais la ressource de code de synchronisation de liaison montante et transmettre l'information de réservation au Noeud B évolué;
si un desdits au moins deux équipements d'utilisateur réserve avec succès la ressource de code de synchronisation de liaison montante depuis le Noeud B évolué au moyen du dispositif de relais, notifier (S302), au moyen du Noeud B évolué, ledit un équipement d'utilisateur du succès de la réservation de ressource de code de synchronisation de liaison montante au moyen du dispositif de relais, de sorte que ledit un équipement d'utilisateur accède au réseau cellulaire radio en utilisant la ressource de code de synchronisation de liaison montante réservée avec succès, et
notifier (S302) tous les équipements d'utilisateur de la réservation de ressource de code de synchronisation de liaison montante.

2. Procédé selon la revendication 1, comprenant en outre l'étape consistant à:
déterminer, au moyen du Noeud B évolué, l'échec de réservation de la ressource de code de synchronisation de liaison montante si lesdits au moins deux équipements d'utilisateur réservent la ressource de code de synchronisation de liaison montante depuis le Noeud B évolué respectivement au moyen de dispositifs de relais différents.

3. Procédé selon la revendication 1, dans lequel le Noeud B évolué notifie tous les équipements d'utilisateur de la réservation de la ressource de code de synchronisation de liaison montante dans un message diffusé ou dans une carte de bits.

4. Procédé selon la revendication 1, comprenant en outre les étapes consistant à:
ignorer, au moyen de l'équipement d'utilisateur, l'information de retrait et accéder au réseau cellulaire radio en utilisant la ressource de code de synchronisation de liaison montante réservée avec succès à la réception à la fois de la notification de la réussite de réservation de la ressource de code de synchronisation de liaison montante et de l'information de retrait.

5. Procédé selon l'une quelconque des revendications 1 à 4, dans lequel le réseau cellulaire radio dans lequel est incorporé le dispositif de relais est un réseau avancé LTE (Long Term Evolution), la ressource de canal d'accès aléatoire est un canal d'accès aléatoire physique PRACH (Physical Random Access Channel), et la ressource de code de synchronisation de liaison montante est une ressource Preamble.

6. Système de commande d'accès aléatoire applicable à un réseau cellulaire radio dans lequel est incorporé un dispositif de relais (701), le système comprenant le dispositif de relais (701) et un Noeud B évolué (702), le dispositif de relais étant configuré pour recevoir depuis un équipement d'utilisateur une ressource de code de synchronisation de liaison montante (S401) qu'il s'agit de transmettre au moyen du relais à un Noeud B évolué sur une ressource quelconque de canal d'accès aléatoire;
le dispositif de relais (701) est en outre configuré pour réserver la ressource de code de synchronisation de liaison montante reçue et pour transmettre l'information de réservation de la ressource de code de synchronisation de liaison montante au Noeud B évolué; et
le Noeud B évolué (702) est configuré pour envoyer une information de retrait à au moins deux équipements d'utilisateur à la réception de la même ressource de code de synchronisation de liaison montante transmise sur la même ressource de canal d'accès aléatoire au moyen desdits au moins deux équipements d'utilisateur, pour notifier l'un desdits au moins deux équipements d'utilisateur de la réussite de la réservation la ressource de code de synchronisation de liaison montante au moyen du dispositif de relais (701), de sorte que l'un des équipements d'utilisateur accède au réseau cellulaire radio en utilisant la ressource de code de synchronisation de liaison montante réservée avec succès, et notifie tous les équipements d'utilisateur de la réservation de la ressource de code de synchronisation de liaison montante si ledit un équipement d'utilisateur a réservé la ressource de code de synchronisation de liaison montante au moyen du dispositif de relais (701).

7. Système selon la revendication 6, dans lequel:
le Noeud B évolué (702) est en outre configuré pour déterminer un échec de réservation de la ressource de code de synchronisation de liaison montante si lesdits au moins deux équipements d'utilisateur réservent la ressource de code de synchronisation de liaison montante au moyen de dispositifs de relais différents.

8. Dispositif de relais (701), applicable à un réseau cellulaire radio dans lequel est incorporé un dispositif de relais, le dispositif de relais étant configuré pour recevoir depuis un équipement d'utilisateur une ressource de code de synchronisation de liaison montante (S401) qu'il s'agit de transmettre au moyen du relais à un Noeud B évolué sur une ressource quelconque de canal d'accès aléatoire;
le relais comprenant en outre une unité de réservation (801) configurée pour réserver la ressource de code de synchronisation de liaison montante reçue, et le relais étant configuré pour transmettre une information de réservation (S403) du code de synchronisation de liaison montante réservé au Noeud B évolué, et
une unité d'envoi (802) configurée pour envoyer audit un équipement d'utilisateur une notification de réussite de réservation de ressource de code de synchronisation de liaison montante envoyée depuis le Noeud B évolué (702), à la réception de la notification.

9. Noeud B évolué (702) applicable à un réseau cellulaire radio dans lequel est incorporé un dispositif de relais (701), le Noeud B évolué (702) comprenant une unité de réception (901), une unité de commande (902) et une unité de traitement (903), dans lequel:
l'unité de réception (901) est configurée pour recevoir une ressource de code de synchronisation de liaison montante transmise sur une ressource de canal d'accès aléatoire au moyen d'un équipement d'utilisateur, et pour recevoir une information de réservation de la ressource de code de synchronisation de liaison montante au moyen du dispositif de relais depuis l'équipement d'utilisateur;
l'unité de commande (902) est configurée pour renvoyer une information de retrait vers au moins deux équipements d'utilisateur à la réception de la même ressource de code de synchronisation de liaison montante transmise sur la même ressource de canal d'accès aléatoire au moyen desdits au moins deux équipements d'utilisateur, et pour déclencher l'unité de traitement si un desdits au moins deux équipements d'utilisateur réserve la ressource de code de synchronisation de liaison montante au moyen du dispositif de relais; et
l'unité de traitement (903) est configurée pour notifier ledit un équipement d'utilisateur de la réussite de la réservation de la ressource de code de synchronisation de liaison montante au moyen du dispositif de relais de sorte que ledit un équipement d'utilisateur accède au réseau cellulaire radio en utilisant la ressource de code de synchronisation de liaison montante réservée avec succès, et pour notifier tous les équipements d'utilisateur de la réservation de la ressource de code de synchronisation de liaison montante.

10. Noeud B évolué selon la revendication 9, dans lequel:
l'unité de commande (902) est en outre configurée pour déterminer l'échec de réservation de la ressource de code de synchronisation de liaison montante si lesdits au moins deux équipements d'utilisateur réservent la ressource de code de synchronisation de liaison manquante respectivement au moyen de dispositifs de relais différents.

11. Équipement d'utilisateur applicable à un réseau cellulaire radio dans lequel est incorporé un dispositif de relais, l'équipement d'utilisateur comprenant:
une unité d'initialisation d'accès aléatoire (1001) configurée pour transmettre de façon aléatoire une ressource de code de synchronisation de liaison montante à un Noeud B évolué sur une ressource de canal d'accès aléatoire; et
une unité de traitement d'accès aléatoire (1002) configurée pour ignorer une information de retrait et pour accéder au réseau cellulaire radio en utilisant la ressource de code de synchronisation de liaison manquante réservée, à la réception à la fois d'une notification de succès de réservation de la ressource de code de synchronisation de liaison montante transmise depuis le dispositif de relais, et de l'information de retrait renvoyée depuis le Noeud B évolué.
